# EUROPÄISCHE PATENTANMELDUNG

(11) **EP 1 351 107 A1**
(43) Veröffentlichungstag der Anmeldung: **08.10.2003**
(21) Anmeldenummer: 03007300.1
(22) Anmeldetag: 01.04.2003
(51) Int. Cl.: G05B 19/042

(54) **Sicherheitssystem für einen elektrischen Antrieb**

(30) Priorität: 04.04.2002 DE 10214877
(71) Anmelder: ZF FRIEDRICHSHAFEN AG, 88038 Friedrichshafen (DE)
(72) Erfinder: Sigg, Peter, 88090 Immenstaad (DE)

(57) **Zusammenfassung**

Ein Sicherheitssystem für einen elektrischen Antrieb weist eine Sicherheitsschleife auf, welche von einem Zentralrechner ausgehend ringförmig alle Geräte mit Leistungsausgängen durchzieht und zum Zentralrechner zurückführt.

## Beschreibung

Die Erfindung betrifft ein Sicherheitssystem nach der im Oberbegriff von Anspruch 1 näher definierten Art.

Durch Störungen im Betriebsablauf oder Schäden am Antriebsmotor können Überlastungen auftreten, die zur Zerstörung des elektrischen Antriebs, der elektrischen Anlage und vor allem auch zu Personenschäden der in unmittelbarem Kontakt mit der Anlage stehenden Personen führen können. Im konkreten Fall eines elektrischen Antriebs für ein Fahrzeug würde dies bedeuten, daß bei einer Störung im Betriebsablauf oder einer Beschädigung bzw. Fehlfunktion des Antriebs das Fahrzeug beschädigt werden könnte und Personen im Fahrzeug und in unmittelbarer Umgebung des Fahrzeugs verletzt werden könnten. Bei einer auftretenden Gefährdung des elektrischen Antriebs, der elektrischen Anlage und von Personen kann durch ein Sicherheitssystem der elektrische Antrieb vom Netz abgeschaltet werden. In Sonderfällen kann auch zunächst nur eine Warnung ausgelöst werden. Sicherheitssysteme von elektrischen Anlagen, wie sie aus dem Stand der Technik bekannt sind, weisen eine Not-Aus-Schleife auf, die doppelt ausgeführt ist und mit elektromechanischen Schaltelementen wie beispielsweise Schützen, Relais und Befehlstastern arbeiten. Die elektrischen Antriebe werden dadurch stillgesetzt, daß die Not-Aus-Schleife an einer Stelle unterbrochen wird, was zu einem Öffnen der Schütze in der Stromzuführung führt. Das Unterbrechen der Not-Aus-Schleife kann z.B. über einen Not-Aus-Taster von Hand oder von einzelnen Schaltelementen über Relaisausgänge ausgelöst werden.

Nachteilig an den aus dem Stand der Technik bekannten Sicherheitssystemen für elektrische Anlagen ist die Tatsache, daß für eine Abschaltung des Systems immer entsprechende elektromechanische Schaltelemente vorhanden sein müssen. Bei den bekannten Not-Aus-Schleifen ist eine gezielte Fehlererkennung oder eine Fehlersuche nicht oder nur eingeschränkt möglich, da keine Rückführung im Sicherheitssystem selbst vorgesehen ist. Weiterhin können die vorhandenen Leitungen nicht mehrfach genutzt werden. Durch die vorgegebene Ausführungsform kann es bei großen Not-Aus-Schleifen auch zu Potentialproblemen kommen, was zu Funktionsstörungen führen kann.

Der vorliegenden Erfindung liegt die Aufgabe zugrunde ein Sicherheitssystem für einen elektrischen Antrieb darzustellen, das eine zuverlässige Abschaltung des Systems ohne elektromechanische Schaltelemente und eine einfache Diagnose eines aufgetretenen Fehlers ermöglicht.

Die der Erfindung zugrundeliegende Aufgabe wird durch ein, auch die kennzeichnenden Merkmale des Hauptanspruchs aufweisendes, gattungsgemäßes Sicherheitssystem für einen elektrischen Antrieb gelöst.

Durch die Verwendung einer einfach ausgeführten Sicherheitsschleife, welche von einem Zentralrechner ausgehend ringförmig alle Geräte mit Leistungsausgängen durchzieht und zum Zentralrechner zurückführt, kann ein Signal eingespeist werden, das, nachdem es durch alle Geräte geströmt ist, wieder im Zentralrechner eingelesen wird. Vorteilhafterweise wird ein pulsweitenmoduliertes Signal fester Grundfrequenz verwendet. Am Ende der Sicherheitsschleife befindet sich ein Lastwiderstand sowie ein Eingang des Zentralrechners zum Rücklesen des eingespeisten Signals. Die entstandene Sicherheitsschleife mit modulierten Signal kann somit vom Zentralrechner innerhalb der Periode des modulierten Signals einfach auf Defekte überwacht werden. Bei den Defekten kann es sich beispielsweise um Kurzschlüsse oder Unterbrechungen handeln. Da die Sicherheitsschleife durch alle Geräte mit Leistungsausgängen führt, kann der Signalverlauf von jedem in der Sicherheitsschleife integrierten Gerät abgegriffen und ausgewertet werden. Fällt das Signal aus oder kommt es zu unzulässigen Abweichungen, so können die Leistungsausgänge unter Umgehung des Zentralrechners direkt abgeschaltet werden. Somit ist es möglich den elektrischen Antrieb bereits nach wenigen Perioden des Signals abzuschalten. Jede Störung im Sicherheitssystem führt also zu einer zuverlässigen Abschaltung der Leistungsausgänge aller Geräte ohne Eingreifen des Zentralrechners. Alle Ausfallmechanismen, beispielsweise Kurzschlüsse und Unterbrechungen, und Signalstörungen, z. B. eingestreute Frequenzen, Impulse oder ähnliches, können diagnostiziert werden. Damit kann es zu keinem unzulässigen Betriebszustand des elektrischen Antriebs kommen. Die Leistungsausgänge aller Geräte können vom Zentralrechner als auch von den in der Sicherheitsschleife befindlichen Schaltern wie Relais oder Not-Aus-Tastern zuverlässig abgeschaltet werden. Das Sicherheitssystem kann vor Inbetriebnahme durch den Zentralrechner auf Funktion der Sicherheitsschleife sowie das Auslösen der Abschaltung überprüft werden. Diese Überprüfung erfolgt zum einen über das Rücklesen des eingespeisten Signals und zum anderen durch das Rücklesen der Zustände der Ausgänge über andere Medien wie beispielsweise einen CAN-Bus. Durch eine Modulation des eingespeisten Signals kann eine Störung mit einfachen Mitteln lokalisiert werden. Die Funktionen für die Sicherheitsabschaltung können von elektronischen Schaltern übernommen werden, so daß auf elektromechanische Schaltelemente ganz verzichtet werden kann. Durch die Auswahl eines geeigneten Signals können über die Sicherheitsschleife zusätzliche sicherheitsrelevante Informationen redundant übertragen werden. Dies führt zu einer erhöhten Funktionssicherheit und ermöglicht beim Ausfall des Hauptsignals einen Notfahrbetrieb.

Vorteilhafte und zweckmäßige Ausgestaltungen der Erfindung sind in den Unteransprüchen angegeben. Die Erfindung ist aber nicht auf die Merkmalskombinationen der Ansprüche beschränkt, vielmehr ergeben sich für den Fachmann weitere sinnvolle Kombinationsmöglichkeiten von Ansprüchen und einzelnen Anspruchsmerkmalen aus der Aufgabenstellung.

## Patentansprüche

1. Sicherheitssystem für einen elektrischen Antrieb, **dadurch gekennzeichnet, daß** das Sicherheitssystem eine einfach ausgeführte Sicherheitsschleife aufweist, welche von einem Zentralrechner ausgehend ringförmig alle Geräte mit Leistungsausgängen durchzieht und zum Zentralrechner zurückführt.

2. Sicherheitssystem nach Anspruch 1, **dadurch gekennzeichnet, daß** ein Signal in die Sicherheitsschleife eingespeist wird, das, nachdem es durch alle Geräte geströmt ist, wieder im Zentralrechner eingelesen wird.

3. Sicherheitssystem nach Anspruch 2, **dadurch gekennzeichnet, daß** das Signal ein pulsweitenmoduliertes Signal ist.

4. Sicherheitssystem nach Anspruch 1, **dadurch gekennzeichnet, daß** sich am Ende der Sicherheitsschleife ein Lastwiderstand sowie ein Eingang des Zentralrechners zum Rücklesen des eingespeisten Signals befindet.

5. Sicherheitssystem nach Anspruch 1, **dadurch gekennzeichnet, daß** Funktionen für die Sicherheitsabschaltung von elektronischen Schaltern übernommen werden.

6. Verwendung eines Sicherheitssystems nach einem der vorhergehenden Ansprüche bei einem Radantrieb zum Antrieb eines Fahrzeugrades, mit einem Antriebsmotor, einem Getriebe und einer Bremse.
